# EUROPÄISCHE PATENTSCHRIFT

(11) **EP 1 322 017 B1**
(45) Veröffentlichungstag und Bekanntmachung des Hinweises auf die Patenterteilung: **22.02.2012**
(21) Anmeldenummer: 02027434.6
(22) Anmeldetag: 09.12.2002
(51) Int. Cl.: H02H 3/33, H02H 1/06

(54) **DI-Schutzeinrichtung**
Differential current protection
Système de protection différentielle

(30) Priorität: 20.12.2001 DE 10163016
(43) Veröffentlichungstag der Anmeldung: 25.06.2003
(73) Patentinhaber: SIEMENS AKTIENGESELLSCHAFT, 80333 München (DE)
(72) Erfinder: Bauer, Bernhard, 93080 Pentling (DE)

(56) Entgegenhaltungen:
- GB-A- 1 517 352
- US-A- 4 053 815

## Beschreibung

Die Erfindung bezieht sich auf eine Differenzstrom(DI)-Schutzeinrichtung mit einem Summenstromwandler und mit einem netzspannungsabhängigen Auslösekreis sowie mit einem Auslöser zur Betätigung eines Schalters im angeschlossenen Leiternetz.

Eine derartige Schutzeinrichtung dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehler- oder Differenzstrom fließt dann über die Person als Körperstrom gegen Erde ab. Der zum Schutz gegen gefährliche Körperströme eingesetzte Schutzschalter trennt bei Überschreiten des sogenannten Bemessungsfehlerstromes sicher und schnell die betroffenen Stromkreise vom Netz.

Der Aufbau eines Schutzschalters ist beispielsweise aus der "etz" (1986), Heft 20, Seiten 938 bis 945, bekannt. Dort sind insbesondere in den Bildern 1 bis 3 Prinzipschaltbilder und Funktionsprinzipien eines Fehlerstrom-Schutzschalters (FI-Schutzschalter) und eines Differenzstrom-Schutzschalters (DI-Schutzschalter) dargestellt.

Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Falle eines Fehlerstroms ein Spannungssignal induziert, das einen über eine Auslösekreiselektronik mit der Sekundärwicklung verbundenen Auslöser ansteuert. Der Auslöser ist seinerseits mit einem Schaltschloss gekoppelt, über das bei Ansprechen des Auslösers die Kontakte eines in der oder jeder Leitung liegenden Leistungsschalters geöffnet werden. Dabei entnimmt der FI-Schutzschalter die zur Auslösung notwendige Energie netzspannungsunabhängig aus dem Fehlerstrom selbst, während beim DI-Schutzschalter die Auslösung netzspannungsabhängig erfolgt. Dazu wird dem vom Leitungsnetz üblicherweise über ein Netzteil gespeisten Auslösekreis des DI-Schutzschalters oder DI-Zusatzes bei Auftreten eines Fehlerstroms das vom Summenstromwandler abgegebene Signal zugeführt.

In als DI-Schutzschalter ausgeführten Niedrigpreis- oder Low-Cost-Geräten werden häufig für die Ansteuerung des Auslösers Thyristoren eingesetzt sowie als Netzteile üblicherweise einfache Widerstands- oder Kondensatornetzteile verwendet. Wird dabei die Funktion des Auslösekreises über einen großen Netzspannungsbereich von z.B. 50V bis 230V gefordert, so muss zwangsläufig die Stromaufnahme der Bauelemente des Auslösekreises minimiert werden, um die Verlustleistung bei einem einfachen und kostengünstigen Aufbau des Netzteils zu begrenzen. Dies erfordert jedoch den Einsatz von Thyristoren mit geringer Ansteuerleistung bzw. niedrigem Gate-Strom.

Allerdings ist bei derartigen Thyristoren die kritische Spannungssteilheit begrenzt mit der Folge, dass bei Überschreiten der kritischen Steilheit durch transiente Netzüberspannungen ein Selbstzünden des Thyristors und damit eine Fehlauslösung der Schutzeinrichtung auftritt. Daher ist bei Verwendung eines Thyristors nicht zuverlässig gewährleistet, dass insbesondere beim sogenannten 1,2/50µsec-Normimpuls zur Simulation typischer transienter Netzüberspannungen keine Auslösung der DI-Schutzeinrichtung mit einer unerwünschten Abschaltung des Leiternetzes erfolgt.

Zwar könnte dieses Problem einer unerwünschten Auslösung der DI-Schutzeinrichtung durch die Parallelschaltung eines Kondensators zur Anoden-Katoden-Strecke des Thyristors abgeschwächt werden, indem dadurch der Spannungsanstieg am Thyristor bei steilflankigen Störimpulsen verlangsamt wird. Da jedoch der Kondensator an der gleichgerichteten Netzspannung liegt, kann dieser bei einer kostengünstigen Auslegung nur eine begrenzte Kapazität aufweisen. Das Problem der Fehlauslösung ist daher auf diese Weise nicht wirksam abstellbar, zumal einerseits betriebsbedingt eine erhöhte Geräteinnentemperatur der DI-Schutzeinrichtung praktisch unvermeidbar ist, und andererseits die kritische Spannungssteilheit eines Thyristors mit zunehmender Temperatur stark abnimmt.

Der Erfindung liegt daher die Aufgabe zugrunde, eine DI-Schutzeinrichtung anzugeben, die bei gleichzeitig möglichst kostensparendem Aufbau unter Vermeidung von Fehlauslösungen auch über einen relativen großen Netzspannungsbereich, insbesondere von z. B. 50V bis 230V, besonders zuverlässig ist.

Diese Aufgabe wird erfindungsgemäß gelöst durch die Merkmale des Anspruchs 1. Dazu weist die DI-Schutzeinrichtung einen vom Auslösekreis angesteuerten ersten elektronischen Schalter und einen mit diesem sowie über einen Gleichrichter mit dem Auslöser verbunden zweiten elektronischen Schalter auf, der einerseits als Spannungsregler zur Einstellung der Versorgungsspannung des Auslösekreises arbeitet, und der andererseits bei Erfüllung eines Auslösekriteriums den Auslöser betätigt.

Die Erfindung geht von der Überlegung aus, dass eine Fehlauslösung der DI-Schutzeinrichtung vermieden werden kann, wenn anstelle eines Thyristors ein Transistor eingesetzt wird, der zu Kompensation des Kostennachteils gegenüber einem Thyristor nicht nur als elektronischer Schalter für den Auslöser dient, sondern zusätzliche Funktionen übernimmt. Dabei kann bei gleichzeitiger Kostenneutralität gegenüber dem Einsatz eines Thyristors erkanntermaßen ein weiterer elektronischer Schalter eingesetzt werden, wenn einer dieser elektronischen Schalter zusätzlich die Funktion eines Spannungsreglers im Netzteil übernimmt. Dadurch wird bei gleichzeitig hoher Funktionalität und Fehlauslösesicherheit der durch Einsatz von Thyristoren verursachte Kostennachteil dadurch, ausgeglichen, dass aufgrund des deutlich verbesserten Wirkungsgrades im Netzteil entsprechende Kosteneinsparungen ermöglicht sind.

In zweckmäßiger Ausgestaltung arbeitet der nachfolgend auch als Haupt-Transistor bezeichnete (zweite) elektronische Schalter als Längsregler. Dazu ist dieser zweckmäßigerweise mit einer Zenerdiode als Referenzelement und mit einem Sieb- oder Glättungskondensator beschaltet. In Verbindung mit einem Gleichrichter zur Netzspannungsgleichrichtung bildet somit der Haupt-Transistor ein Netzteil mit Längs- oder Spannungsregelung.

Als Haupt-Transistor wird zweckmäßigerweise ein sogenannter IGBT (Isolated Gate Bipolar Transistor) eingesetzt, da sich dieser eingangsseitig wie ein Feldeffekttransistor (MOS-FET) und ausgangsseitig wie ein bipolarer Transistor verhält. Dieses Verhalten ist gegenüber dem typischen Verhalten eines Thyristors insbesondere bezüglich der Störfestigkeit bei transienten Netzüberspannungen besonders vorteilhaft. Als weiterer elektronischer Schalter oder Neben-Transistor wird zweckmäßigerweise ein MOS-FET eingesetzt.

Die mit der Erfindung erzielten Vorteile bestehen insbesondere darin, dass durch den Einsatz von zwei elektronischen Schaltern in Form zweckmäßigerweise eines Haupt-Transistors und eines Neben-Transistors in einer DI-Schutzeinrichtung aufgrund der dadurch ermöglichten Realisierung eines Netzteils mit Längsregelung eine hohe Funktionalität mit großer Auslösezuverlässigkeit und hoher Fehlauslösefestigkeit bei gleichzeitig niedrigen Kosten erzielt wird.

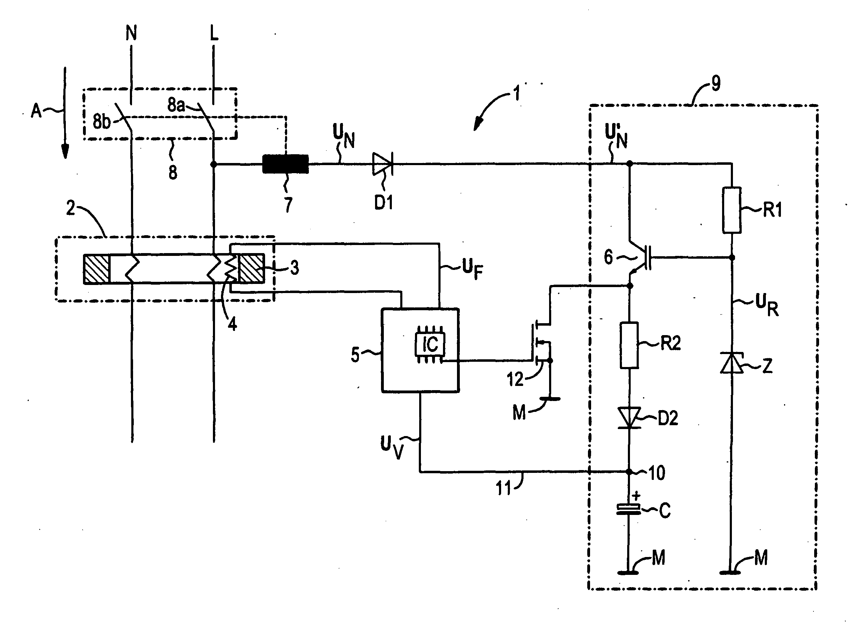

Nachfolgend wird ein Ausführungsbeispiel der Erfindung anhand einer Zeichnung näher erläutert. Dabei zeigt die einzige Figur schematisch in einem Blockschaltbild eine DI-Schutzeinrichtung mit einem Neben-Transistor sowie einem Haupt-Transistor zur Spannungsregelung und zum Betätigen eines Auslösers.

Die in der Figur dargestellte, nachfolgend auch als Schutzschalter bezeichnete DI-Schutzeinrichtung 1 umfasst einen Summenstromwandler 2 mit einem Wandlerkern 3, durch welchen ein Außenleiter L und der Nullleiter N eines Zwei-Leiternetzes geführt sind. Der Schutzschalter ist dabei einem (nicht dargestellten) elektrischen Verbraucher vorgeschaltet, welcher beispielsweise entlang der Einspeiserichtung A aus dem Leiternetz L,N mit Strom versorgt wird. Das Leiternetz kann auch ein Drehstrom- oder Vier-Leiternetz mit drei Phasenleitern und einem Nullleiter sein.

Der Wandlerkern 3 ist des Weiteren mit einer Sekundärspule 4 umwickelt. Tritt eine Störung auf, wenn z.B. infolge eines Leckstroms ein Teil des zugeführten Stromes verbraucherseitig über Erde abgeführt wird, so induziert dieser Differenzstrom oder Fehlerstrom in der Sekundärspule 4 des Summenstromwandlers 2 eine Differenzspannung U_{F}, welche als Maß für den aufgetretenen Fehlerstrom herangezogen wird. Die in der Sekundärspule 4 erzeugte Differenzspannung U_{F} wird in einem Auslösekreis 5 mit einer Auslösekreiselektronik IC ausgewertet.

Zum Betrieb des Auslösekreises 5 wird der DI-Schutzschalter 1 - im Gegensatz zum netzspannungsunabhängigen FI-Schutzschalter - mit einem durch Gleichrichtung der Netzspannung U_{N} von z. B. 110V oder 230V gewonnen Strom versorgt. Dazu ist ein (zweiter) elektronischer Schalter in Form eines nachfolgend als Haupt-Transistor 6 bezeichneten IGBT's vorgesehen, der gate- oder steuerseitig mit einem Widerstand R1 und einer Zenerdiode Z beschaltet ist. Der Haupt-Transistor 6 nimmt gateseitig nur wenig Strom auf, so dass der durch den Widerstand R1 und die Zenerdiode Z gebildete Zweig sehr hochohmig werden kann, was zu geringen Verlusten führt.

Die katodenseitig mit dem Gate oder Steuerseite des Haupt-Transistors 6 verbundene Zenerdiode Z ist anodenseitig gegen Masse M geschaltet. Kollektorseitig ist der Haupt-Transistor 6 einerseits mit dessen Basis über den Widerstand R1 und andererseits über eine Diode D1 mit einem Auslöser 7 verbunden, dessen Relaisspule an den Außenleiter L angeschlossen ist. Mechanisch ist der Auslöser 1 über ein (nicht dargestelltes Schaltschloss) mit einem Schalter 8 verbunden, dessen Schaltkontakte 8a, 8b im Außenleiter L bzw. im Nulleiter N liegen. Im Ausführungsbeispiel ist mittels der anodenseitig mit dem Auslöser 7 bzw. dessen Relaisspule verbundenen Diode D1 eine Einweg-Gleichrichtung realisiert. Statt dessen kann auch ein Brückengleichrichter, insbesondere bei einem Vier-Leiternetz, vorgesehen sein.

Der Haupt-Transistor 6 ist emitterseitig über eine Reihenschaltung aus einem Widerstand R2 und einer Diode D2 sowie einem Sieb- oder Ladekondensator C gegen Massen M geschaltet. In dieser Beschaltung des Haupt-Transistors 6 mit den Widerständen R1, R2 sowie den Dioden D2, Z und dem Kondensator C ist eine Spannungsregelungsschaltung 9 mit einem Spannungsabgriff 9 zwischen der Diode D2 und dem Kondensator C realisiert. Über eine mit diesem Abgriff 10 verbundene Versorgungsleitung 11 erfolgt die Spannungsversorgung für den Auslösekreis 5.

Der Haupt-Transistor 6 arbeitet zusammen mit dem Referenzelement in Form der Zenerdiode Z und einem Siebkondensator C als Längsregler. In Verbindung mit der Gleichrichterdiode D1 arbeitet die Regelschaltung 9 somit als Netzteil mit Längsregelung.

Ein gate- oder steuerseitig mit dem Auslösekreis 5 verbundener (erster) elektronischer Schalter 12 in Form eines nachfolgend als Neben-Transistor bezeichneten MOS-FET ist drainseitig mit dem Emitter des Haupt-Transistors 6 und sourceseitig mit Masse M verbunden.

Im Falle eines Fehlerstroms wird die Differenzspannung U_{F} im Auslösekreis 5 hinsichtlich der Erfüllung eines Auslösekriteriums ausgewertet. Übersteigt die ggf. verstärkte und gleichgerichtete Differenzspannung U_{F} hinsichtlich ihres Betrages und ihrer Dauer einen Schwellwert, so gibt der Auslösekreis 5 ein Auslösesignal U_{A} an den Neben-Transistor 12 ab, der daraufhin leitend gesteuert wird. Dadurch wird der Haupt-Transistor 6 emitterseitig an Masse M gezogen, so dass dieser nachregelt. Infolge des dadurch bedingten hohen Stromflusses über den Haupt-Transistor 6 und damit über den Auslöser 7 erfolgt dessen Auslösung, so dass der Schalter 8 betätigt wird und dessen Schaltkontakte 8a,8b geöffnet werden.

Beim Einschalten der Schutzeinrichtung 1 begrenzt der Widerstand R2 den Einschaltstrom, da dann der Kondensator C geladen wird. Durch diese Ladestrombegrenzung wird eine Fehlauslösung besonders zuverlässig vermieden. Mittels der Diode D2 wird vermieden, dass im Auslösefall die Spannungsversorgung für den Auslösekreis 5 zusammenbricht.

Der sowohl die Funktion des Netzteil-Spannungsreglers als auch die Funktion des elektronischen Schalters für den Auslöser 1 übernehmende Haupt-Transistor 6 liegt kollektorseitig an der mittels der Diode D1 gleichgerichteten Netzspannung U_{N}' aus dem Leiternetz L, N und regelt diese gleichgerichtete Netzspannung U'_{N} auf die Versorgungsspannung U_{V} für den Auslösekreis 5 herunter. Dabei ergibt sich die Versorgungsspannung U_{V} - unter Vernachlässigung des Spannungsabfalls am Widerstand R2 und an der Diode D2 - aus der Differenz zwischen der Referenzspannung U_{R} der Zenerdiode Z und dem Spannungsabfall an der Gate-Emitter-Strecke des Haupt-Transistors 6. Der Neben-Transistor 12 liegt dabei an der im Vergleich zur gleichgerichteten Netzspannung U'_{N} wesentlich niedrigeren Versorgungsspannung U_{V} der Auslöseelektronik 5.

Durch die Ladestrombegrenzung des Glättungs- oder Siebkondensators C durch den Widerstand R2 werden Fehlauslösungen beim Zuschalten der Netzspannung U_{N} vermieden. Insgesamt ist dabei die Stromaufnahme der Auslöseelektronik IC des Auslösekreises 5 gegenüber dem Ansprechstrom des Auslösers 7 vernachlässigbar, so dass der Betriebsstrom für den Auslösekreis 5 problemlos über den Auslöser 7, d. h. über dessen Relaisspule geführt werden kann.

Der Neben-Transistor 12 ist aufgrund der geringen Spannungsbeanspruchung im Vergleich zum Haupt-Transistor 6 wesentlich kostengünstiger. Da der Haupt-Transistor 6 gleichzeitig als Spannungsregler arbeitet, kann ein kostenintensives Kondensatornetzteil eingespart werden. Da zudem das realisierte Netzteil mit Längsregler bei einem großen Netzspannungsbereich eine bessere Verlustleistungsbilanz aufweist als eine Zenderdiodenregelung eines Kondensator- oder Widerstandsnetzteils, ermöglicht die Anwendung der Kombination des Haupt-, und Neben-Transistors 6 bzw. 10 den Einsatz einer vergleichsweise kostengünstigen integrierten Schaltung der Auslöseelektronik IC mit großer Stromaufnahme im Auslösekreis 5.

Insgesamt sind durch die Funktionskombination des Haupt-Transistor 6 die technischen Vorteile einer besonders hohen Fehlauslösefestigkeit bei gleichzeitig geringen Kosten besonders zuverlässig erfüllt.

### Bezugszeichenliste

- 1: DI-Schutzeinrichtung
- 2: Summenstromwandler
- 3: Wandlerkern
- 4: Sekundärspule/-wicklung
- 5: Auslösekreis
- 6: Haupt-Transistor/IGBT
- 7: Auslöser
- 8: Schalter
- 8a,b: Schaltkontakt
- 9: Regelschaltung
- 10: Abgriff
- 11: Versorgungsleitung
- 12: Neben-Transistor/MOS-FET

- A: Einspeiserichtung
- C: Sieb-/Glättungskondensator
- D1,2: Diode
- L: Außenleiter
- N: Nullleiter
- R1,2: Widerstand
- U_{A}: Auslösesignal
- U_{F}: Differenzspannung
- U_{N}: Netzspannung
- U_{R}: Referenzspannung
- U_{V}: Versorgungsspannung

## Patentansprüche

1. Differenzstrom(DI)-Schutzeinrichtung (1) mit einem Summenstromwandler (2) und einem mit diesem sekundärseitig verbundenen netzspannungsabhängigen Auslösekreis (5) sowie mit einem Auslöser (7) zur Betätigung eines Schalters (8) im angeschlossenen Leiternetz (L,N), **gekennzeichnet durch**
- einen vom Auslösekreis (5) angesteuerten ersten elektronischen Schalter (12), und
- einen mit dem ersten elektronischen Schalter (12) sowie über einen Gleichrichter (D1) mit dem Auslöser (7) verbunden zweiten elektronischen Schalter (6), der einerseits als Spannungsregler zur Einstellung einer Versorgungsspannung (U_{V}) des Auslösekreises (5) arbeitet, und der andererseits bei Erfüllung eines Auslösekriteriums (U_{F}) den Auslöser (7) betätigt.

2. DI-Schutzeinrichtung nach Anspruch 1, **dadurch gekennzeichnet, dass** der zweite elektronische Schalter (6) zusammen mit einem Referenzelement (Z) und einem Kondensator (C) eine Spannungsregelschaltung (9) bildet.

3. DI-Schutzeinrichtung nach Anspruch 2, **dadurch gekennzeichnet, dass** die Spannungsregelschaltung (9) in Verbindung mit einem Gleichrichter (D1) als Netzteil mit Längsregelung arbeitet.

4. DI-Schutzeinrichtung nach einem der Ansprüche 1 bis 3, **dadurch gekennzeichnet, dass** der zweite elektronischen Schalter (6) steuerseitig mit einem Spannungsbegrenzungselement (Z) und mit einem Strombegrenzungselement (R1) beschaltet ist.

5. DI-Schutzeinrichtung nach einem der Ansprüche 1 4, **dadurch gekennzeichnet, dass** der zweite elektronische Schalter (6) emitterseitig mit einer Reihenschaltung aus einem ersten Element (R2) zur Einschaltstrombegrenzung, einem als Entladungsschutz wirksamen zweiten Element (D2) und einem Kondensator (C) beschaltet ist.

6. DI-Schutzeinrichtung nach Anspruch 5, **dadurch gekennzeichnet, dass** dem Auslösekreis (5) über einen Abgriff (10) zwischen dem zweiten Element (D2) und dem Kondensator (C) eine Versorgungsspannung (Uᵥ) zugeführt ist.

7. DI-Schutzeinrichtung nach Anspruch 6, **dadurch gekennzeichnet, dass** die Versorgungsspannung (Uv) der Differenz zwischen der Referenzspannung (UR) des Referenzelemente (Z) und dem Spannungsabfall am zweiten elektronischen Schalter (6) entspricht.

8. DI-Schutzeinrichtung nach einem der Ansprüche 1 bis 7, **dadurch gekennzeichnet, dass** der erste elektronischen Schalter (12) ein Transistor, insbesondere ein MOS-FET ist.

9. DI-Schutzeinrichtung nach einem der Ansprüche 1 bis 8, **dadurch gekennzeichnet, dass** der zweite elektronische Schalter (6) ein Transistor, insbesondere ein IGBT ist.

## Claims

1. Differential current (DI) protection device (1) having a summation current transformer (2) and a line-voltage-dependent trip circuit (5) connected thereto on the secondary side, and having a tripping device (7) for actuating a switch (8) in the connected conductor network (L,N), **characterised by**
- a first electronic switch (12) controlled by the trip circuit (5) and
- a second electronic switch (6) connected to the first electronic switch (12) and to the tripping device (7) via a rectifier (D1) which on the one hand operates as a voltage regulator for adjusting a supply voltage (U_{V}) of the trip circuit (5) and on the other hand actuates the tripping device (7) when a trip criterion (U_{F}) is fulfilled.

2. DI protection device according to claim 1, **characterised in that** the second electronic switch (6) forms a voltage regulating circuit (9) together with a reference element (Z) and a capacitor (C).

3. DI protection device according to claim 2, **characterised in that** the voltage regulating circuit (9) operates in conjunction with a rectifier (D1) as a power supply with in-phase voltage control.

4. DI protection device according to one of claims 1 to 3, **characterised in that** the second electronic switch (6) is connected on the control side to a voltage limiting element (Z) and to a current limiting element (R1).

5. DI protection device according to one of claims 1 to 4, **characterised in that** the second electronic switch (6) is connected on the emitter side to a series circuit consisting of a first element (R2) for switch-on current limiting, a second element (D2) acting as discharge protection and a capacitor (C).

6. DI protection device according to claim 5, **characterised in that** a supply voltage (U_{V}) is supplied to the trip circuit (5) by way of a tap (10) between the second element (D2) and the capacitor (C).

7. DI protection device according to claim 6, **characterised in that** the supply voltage (U_{V}) corresponds to the difference between the reference voltage (U_{R}) of the reference element (Z) and the voltage drop at the second electronic switch (6) .

8. DI protection device according to one of claims 1 to 7, **characterised in that** the first electronic switch (12) is a transistor, in particular a MOSFET.

9. DI protection device according to one of claims 1 to 8, **characterised in that** the second electronic switch (6) is a transistor, in particular an IGBT.

## Revendications

1. Dispositif de protection (1) à courant différentiel résiduel (DI) avec un transformateur de courant sommateur (2) et un circuit de déclenchement (5) qui est relié à celui-ci du côté secondaire et est dépendant de la tension du réseau ainsi qu'avec un déclencheur (7) pour actionner un commutateur (8) dans le réseau de conducteurs raccordé (L, N), **caractérisé par** .
- un premier commutateur électronique (12) commandé par le circuit de déclenchement (5) et
- un deuxième commutateur électronique (6) relié au premier commutateur électronique (12) ainsi qu'au déclencheur (7) via un redresseur (D1), lequel deuxième commutateur, d'une part, fonctionne en tant que régulateur de tension pour régler une tension d'alimentation (U_{V}) du circuit de déclenchement (5) et, d'autre part, actionne le déclencheur (7) lorsqu'un critère de déclenchement (U_{F}) est satisfait.

2. Dispositif de protection (1) à courant différentiel résiduel selon la revendication 1, **caractérisé en ce que** le deuxième commutateur électronique (6) constitue un circuit de réglage de la tension (9) conjointement avec un élément de référence (Z) et un condensateur (C).

3. Dispositif de protection (1) à courant différentiel résiduel selon la revendication 2, **caractérisé en ce que** le circuit de réglage de la tension (9) fonctionne en liaison avec un redresseur (D1) en tant que bloc secteur avec régulation longitudinale.

4. Dispositif de protection (1) à courant différentiel résiduel selon l'une des revendications 1 à 3, **caractérisé en ce que** le deuxième commutateur électronique (6) est connecté, côté commande, à un élément de limitation de tension (Z) et à un élément de limitation de courant (R1).

5. Dispositif de protection (1) à courant différentiel résiduel selon l'une des revendications 1 à 4, **caractérisé en ce que** le deuxième commutateur électronique (6) est connecté, côté émetteur, à un circuit en série composé d'un premier élément (R2) pour la limitation du courant d'enclenchement, d'un deuxième élément (D2) qui agit en tant que protection contre les décharges, et d'un condensateur (C).

6. Dispositif de protection (1) à courant différentiel résiduel selon la revendication 5, **caractérisé en ce qu'**une tension d'alimentation (U_{V}) est envoyée sur le circuit de déclenchement (5) via une prise (10) située entre le deuxième élément (D2) et le condensateur (C).

7. Dispositif de protection (1) à courant différentiel résiduel selon la revendication 6, **caractérisé en ce que** la tension d'alimentation (U_{V}) correspond à la différence entre la tension de référence (U_{R}) des éléments de référence (Z) et la chute de tension au niveau du deuxième commutateur électronique (6).

8. Dispositif de protection (1) à courant différentiel résiduel selon l'une des revendications 1 à 7, **caractérisé en ce que** le premier commutateur électronique (12) est un transistor, et plus particulièrement un MOS-FET.

9. Dispositif de protection (1) à courant différentiel résiduel selon l'une des revendications 1 à 8, **caractérisé en ce que** le deuxième commutateur électronique (6) est un transistor, et plus particulièrement un IGBT.
